# EUROPÄISCHE PATENTSCHRIFT

(11) **EP 1 924 462 B1**
(45) Veröffentlichungstag und Bekanntmachung des Hinweises auf die Patenterteilung: **07.01.2009**
(21) Anmeldenummer: 06805652.2
(22) Anmeldetag: 06.09.2006
(51) Int. Cl.: B60N 2/015

(54) **IN EINEM TEXTILEN STÜTZRAHMEN AUFGEHÄNGTER TEXTILER SITZ**
TEXTILE SEAT THAT IS SUSPENDED IN A TEXTILE SUPPORTING FRAME
SIEGE TEXTILE EN SUSPENSION DANS UN CADRE DE SUPPORT TEXTILE

(30) Priorität: 15.09.2005 DE 102005044208
(43) Veröffentlichungstag der Anmeldung: 28.05.2008
(73) Patentinhaber: AUTOFLUG GMBH, 25462 Rellingen (DE)
(72) Erfinder: HANSEN, Holger, 20357 Hamburg (DE)
(74) Vertreter: Müller, Karl-Ernst
(86) Internationale Anmeldenummer: PCT/EP2006/008655
(87) Internationale Veröffentlichungsnummer: WO 2007/031216

(56) Entgegenhaltungen:
- DE-A1- 4 303 719
- DE-B3- 10 341 483
- DE-B3-7102004 009 55
- US-A- 2 829 702

## Beschreibung

Die Erfindung betrifft ein Land-, Luft- oder Seefahrzeug mit einem an einem aus textilen Gurten aufgespannten Stützgerüst gehalterten Sitz zur Beförderung einer in dem Sitz sitzenden Person, wobei das Stützgerüst an oberhalb der Sitzfläche und unterhalb der Sitzfläche des Sitzes befindlichen Fahrzeugstrukturteilen befestigt ist.

Ein derartiges Fahrzeug ist in der WO 2005/080126 A1 beschrieben, wobei in dessen Transportraum eine größere Anzahl von Sitzen für darin zu befördernde Personen eingebaut sein soll; die einzelnen Sitze sind an jeweils zwischen den Dach- und den Bodenflächen des Transportraumes in einem Raster aufgespannten, aus textilen Gurten bestehenden Netzwerken festgelegt. Die Sitze bestehen aus einer als druckfestes Bauteil ausgeführten Sitzschale, die die Sitzfläche des Sitzes bildet. Zusätzlich ist zwischen den senkrecht verlaufenden Gurten eines jeden Netzwerkes eine von der Sitzschale getrennte Rückenlehne und/oder Kopfstütze aus einem textilen Material angeordnet und aufgespannt. Zur seitlichen Sicherung einer auf dem Sitz sitzenden Person sind bereits von dem vorderen Rand der Sitzschale zu dem rückwärtigen Netzwerk führende Diagonalgurte vorgesehen.

Ein ähnlicher Sitz ist aus der US-A-2 829 702 bekannt, welche den nächstliegenden Stand der Technik darstellt und den Oberbegriff des Anspruchs 1 offenbart. Hierbei bildet ein nachgiebiges Netz den Sitz für den Fahrzeuginsassen, wobei das Netz an einem aus zwei getrennten, parallel zwischen unteren und oberen fahrzeugfesten Verankerungen aufgespannten Diagonalgurten und diese Diagonalgurte miteinander verbindenden, fest vernähten Halte- und Stützgurten gebildeten textilen Stützgerüst durch entsprechende Vernähungen befestigt ist.

Derartige Sitze sind in ihrer Auslegung nicht anpassbar und auch hinsichtlich der Sitzposition der betreffenden Person nicht einstellbar. Dies ist dann besonders nachteilig, wenn der Sitz von dem Führer des entsprechenden Fahrzeuges benutzt werden soll, weil es für einen Fahrersitz auf eine bequeme, jedoch gleichzeitig in allen Bewegungszuständen des Fahrzeuges sichere Körperhaltung ankommt. Schließlich ist bei dem aus der W02005/080126 A1 bekannten Sitz die als druckfestes Bauteil ausgeführte Sitzschale ein fester Bestandteil der Sitzaufhängung, die einwirkende Stöße in einem unerwünschten Maße auf die in dem Sitz sitzende Person überträgt.

Der Erfindung liegt daher die Aufgabe zugrunde, für ein Land-, Luft- oder Seefahrzeug mit den gattungsgemäßen Merkmalen einen Sitz zur Verfügung zu stellen, der hinsichtlich der Sitzposition des Sitzbenutzers einstellbar ist und eine bequeme Sitzposition zur Verfügung stellt.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass das Stützgerüst als den als textile Sitzschale mit der Sitzfläche und einer Rückenlehne ausgebildeten Sitz ringförmig umschließender Stützrahmen bestehend aus einem einzigen durch fahrzeugfest angeordnete Ringösen geführten textilen Gurt ausgebildet ist, wobei die seitlich des Sitzes verlaufenden Gurtteile als Diagonalgurte zwischen einer unterhalb der Sitzfläche angebrachten Ringöse und einer oberhalb der Rückenlehne angebrachten Ringöse verlaufen, und dass der Sitz an den Diagonalgurten verschiebbar angeordnet und wenigstens ein Verstellgurt von der Rückenlehne des Sitzes zu einer oberhalb des Sitzes angeordneten Fixiervorrichtung für den Verstellgurt geführt ist.

Mit der Erfindung ist der Vorteil verbunden, dass aufgrund der möglichen Verschiebung der textilen Sitzschale an den Diagonalgurten des textilen Stützrahmens die Sitzschale und damit die Sitzposition sehr leicht an die Größe der zu befördernden Person anpassbar ist, indem gleichzeitig eine Höhenverstellung sowie eine Vorwärts- bzw. Rückwärtsverstellung der Sitzschale eintritt. Somit sind die Bedienungselemente des Fahrzeuges in den einzelnen Stellungen der Sitzschale jeweils gut zugänglich. Die aus einem atmungsaktiven Gewebe hergestellte Sitzschale bietet der Benutzerperson eine größtmögliche Körperauflage, da Sitzfläche und Rückenlehne ineinander übergehen, so dass in der jeweiligen Sitzposition einer Benutzerperson eine geringstmögliche Körperspannung eintritt. Hierdurch wird eine Schonung der Lendenwirbel und der Bandscheibe der Benutzerperson erreicht. Aufgrund der kardanischen Aufhängung der textilen Sitzschale in dem aufgespannten textilen Stützrahmen werden vom Fahrzeug ausgehende Stöße abgemildert. Die Diagonalgurte sorgen zudem für einen guten seitlichen Schutz der Benutzerperson, falls das Fahrzeug in eine Seitenlage gelangen oder auch einen Fahrzeugüberschlag ausführen sollte. Schließlich ist eine nachträgliche Umrüstung bestehender Fahrzeuge in einfacher Weise möglich.

In einer ersten Ausführungsform der Erfindung ist die Fixiervorrichtung als Klemmvorrichtung für den Verstellgurt ausgebildet, so dass über die Fixierung des Verstellgurtes die jeweilige Stellung der textilen Sitzschale an den Diagonalgurten festlegbar ist.

Alternativ kann vorgesehen sein, dass die Fixiervorrichtung für den Verstellgurt als Gurtaufroller ausgebildet ist, der über einen Bowdenzug mit einer in Reichweite der auf dem Sitz sitzenden Person angeordneten Schaltvorrichtung verbunden ist, mittels derer der Gurtaufroller entweder in einen Freilaufzustand mit freiem Gurtbandauszug entgegen der in Aufwickelrichtung vorgegebenen Vorspannung des Gurtaufrollers oder in einen Sperrzustand mit jeweils vollständiger, sowohl in Gurtaufwickelrichtung als auch in Gurtauszugsrichtung wirksamer Blockierung der Gurtwelle oder in einen den Gurtaufroller lediglich in Gurtauszugsrichtung sperrenden Positionierungszustand schaltbar ist. Eine derartige Schaltvorrichtung zur Positionierung einer angeschnallten Person in einem Fahrzeug ist im Grundsatz aus der DE 103 41 483 B3 bekannt. Befindet sich dabei der Gurtaufroller in dem Freilaufzustand, kann die Sitzschale in die unterste und zugleich vorderste Stellung bewegt werden. Ist bei einer entsprechenden Stellung der Schaltvorrichtung der Gurtaufroller lediglich in einen die Gurtauszugsrichtung sperrenden Positionierungszustand geschaltet, so kann die Sitzschale an den Diagonalgurten gleichzeitig aufwärts und rückwärts bewegt werden, weil der Gurtaufroller in dieser Schaltstellung das Gurtband einzieht, einen Gurtbandauszug jedoch blockiert. Die dritte Stellung stellt den Sperrzustand dar, in welchem die Stellung der Sitzschale in dem Stützrahmen fixiert ist.

Nach einem Ausführungsbeispiel der Erfindung ist vorgesehen, dass in den Verlauf des den Stützrahmen bildenden Gurtes ein Gurtspanner eingeschaltet ist. Weiterhin kann vorgesehen sein, dass die Diagonalgurte des Stützrahmens in einem Winkel von 45° zur horizontalen Fahrzeugachse angeordnet sind; in diesem Fall sind die Wegeänderungen sowohl in vertikaler als auch in horizontaler Richtung jeweils gleich. Soweit nach einem Ausführungsbeispiel der Erfindung vorgesehen ist, dass die Diagonalgurte des Stützrahmens in einem Winkel von mehr als 45° zur horizontalen Fahrzeugachse angeordnet sind, kann ein entsprechend anderes proportionales Verhältnis zwischen der Vertikal- und der Horizontalbewegung der Sitzschale eingestellt werden.

In einer weiteren, besonders hervorzuhebenden Ausführungsform sieht die Erfindung vor, dass der Sitz zusätzlich zur Anpassung an die Körpergröße der Benutzerperson auch an die Körpermaße beziehungsweise die Körperform der Benutzerperson anpassbar ist, und hierzu ist vorgeschlagen, dass die textile Sitzschale mit die seitlichen Diagonalgurte des Stützrahmens beweglich übergreifenden Schürzen ausgebildet ist und die Schürzen zur Veränderung der zwischen den Diagonalgurten befindlichen Auflagerfläche für eine in dem Sitz sitzende Person über längenveränderliche Spanngurte in ihrem die Diagonalgurte übergreifenden Maß einstellbar sind. Hiermit ist der Vorteil verbunden, dass über die Änderung der "Eintauchtiefe" des zwischen den Diagonalgurten befindlichen Bereichs der Sitzschale die Auflagerfläche der Benutzerperson an kleinere schlanke oder größere, kräftig gebaute Personen anpassbar ist.

Nach einem Ausführungsbeispiel der Erfindung ist vorgesehen, dass die Spanngurten über Umlenkrollen geführt und an den Verstellgurt für den Sitz angeschlossen sind; hiermit wird eine gegenseitige Kopplung der Verschiebebewegung der Sitzschale an den Diagonalgurten und der Anpassung des zwischen den Diagonalgurten befindlichen Sitzbereichs eingestellt. Hierbei kann zusätzlich vorgesehen sein, dass in den Gurtverlauf der Spanngurte ein Gurtspanner eingeschaltet ist.

Zur Steuerung der Sitzbewegung beziehungsweise Sitzeinstellung ist auch bei diesem Ausführungsbeispiel der Erfindung vorgesehen, dass an dem Gurtverlauf von Spanngurt und Verstellgurt ein zu einem Gurtaufroller führender Steuergurt angreift und der Gurtaufroller über einen Bowdenzug mit einer Schaltvorrichtung verbunden ist, mittels derer der Gurtaufroller entweder in einen Freilaufzustand mit freiem Gurtbandauszug entgegen der in Aufwickelrichtung vorgegebenen Vorspannung des Gurtaufrollers oder in einen Sperrzustand mit jeweils vollständiger, sowohl in Gurtaufwickelrichtung als auch in Gurtauszugsrichtung wirksamer Blockierung der Gurtwelle oder in einen den Gurtaufroller lediglich in Gurtauszugsrichtung sperrenden Positionierungszustand schaltbar ist.

Zum Ausgleich der von den Abspanngurten auf die seitlichen Schürzen der textilen Sitzschale ausgeübten Spannung kann vorgesehen sein, dass an der Sitzschale im Bereich der Sitzfläche ein Abspanngurt angreift, der der Gurtspannung der an den Schürzen angreifenden Spanngurte entgegenwirkt, wobei in den Verlauf des Abspanngurtes ebenfalls ein Gurtspanner eingeschaltet sein kann. Hiermit wird verhindert, dass die Sitzschale in ihrem zwischen den Diagonalgurten befindlichen Bereich aufgrund der von den Spanngurten ausgeübten Vorspannung eine zu flache Ausbildung aufweist, so dass die seitliche Stützwirkung der Diagonalgurte nicht mehr ausreichend wäre.

Nach einem Ausführungsbeispiel der Erfindung ist vorgesehen, dass der Abspanngurt an den Steuergurt angeschlossen ist, somit auch angeschlossen ist an den aus den Abspanngurten und dem Verstellgurt bestehenden geschlossenen Gurtring, so dass bei einer Verstellung der textilen Sitzschale über den Verstellgurt beziehungsweise die die Sitzform festlegenden Spanngurte gleichzeitig auch die weitere Sitzproportion entsprechend angepasst bzw. geändert wird.

Nach einem Ausführungsbeispiel der Erfindung ist das Fahrzeug als Gabelstapler mit einem podestartigen, sich unterhalb eines Fahrersitzes befindlichen Geräteträger und einem hinter dem Fahrersitz hochragenden Überrollbügel ausgebildet, wobei die den Stützrahmen aufspannenden Ringösen am Geräteträger und am Überrollbügel befestigt sind. Die zu dem erfindungsgemäßen Sitz bereits beschriebenen Vorteile fallen bei einem Gabelstapler besonders in Gewicht. Die im Stand der Technik bei Gabelstaplern eingesetzten Sitze in einer Ausbildung, wie sie zum Beispiel beim Lastkraftwagen bekannt sind, sind nämlich bei einem Gabelstapler mit besonderen Nachteilen behaftet. So werden beim Fahren mit Gabelstaplern erhebliche Stöße auf den Fahrer übertragen, deren Dämpfung beispielsweise über das Fahrzeug wie bei einem LKW ausscheidet, da sich eine solche Dämpfung nicht mit vertretbarem Aufwand und im Zusammenwirken mit der Hubeinrichtung des Gabelstaplers realisieren lässt. Bei der Steuerung der Be- und Entladebewegung der Hubeinrichtung des Gabelstaplers kommt es auf eine sichere Führung der Füße der Bedienerperson in Relation zu den Pedalen sowie der Hände zu den Steuerhebeln und dem Lenkrad an. Der entsprechende Sitz muss daher eine gute ergonomische Ausformung haben, die insbesondere diese spezielle Sitzhaltung unterstützt. Vor diesem Hintergrund ist eine Verstellung des Sitzes in der vertikalen sowie in der horizontalen Richtung wünschenswert, die aber gerade bei Gabelstaplersitzen bisher kaum realisiert ist. Gesetzlich gefordert ist ferner ein Rückhaltegurt, der den Fahrer insbesondere in dem Fall eines seitlichen Umkippens des Gabelstaplers zurückhalten soll. Schließlich soll der Sitz auch ein schnelles Ein- und Aussteigen ermöglichen. Wie sich aus der Darstellung und Erläuterung der erfindungsgemäßen Ausbildung des Sitzes mit seinen speziellen Merkmalen ergibt, werden in vorteilhafter Weise die vorstehenden Nachteile durch den erfindungsgemäßen Sitz beseitigt.

Insbesondere kann vorgesehen sein, dass die an dem Überrollbügel befestigten Ringösen lageveränderbar eingerichtet sind, womit - wie schon angesprochen - der Verlauf der Diagonalgurte bezüglich der horizontalen Achse des Fahrzeuges geändert werden kann.

In der Zeichnung sind Ausführungsbeispiele der Erfindung wiedergegeben, welche nachstehend beschrieben sind. Es zeigen:
- Fig. 1: einen insbesondere für einen Gabelstapler ausgelegten Sitz mit einer darauf sitzenden Benutzerperson in einer schematischen Seitenansicht,
- Fig. 2: den aus Figur 1 ersichtlichen Sitz ohne Benutzerperson in einer Perspektivansicht,
- Fig. 3: den Sitz gemäß Figur 1 in einer weiterentwickelten Ausführungsform.

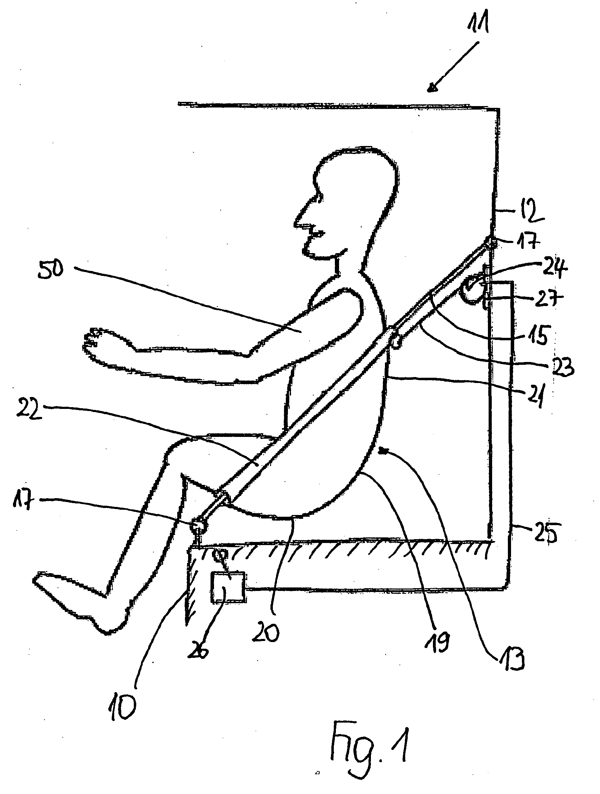

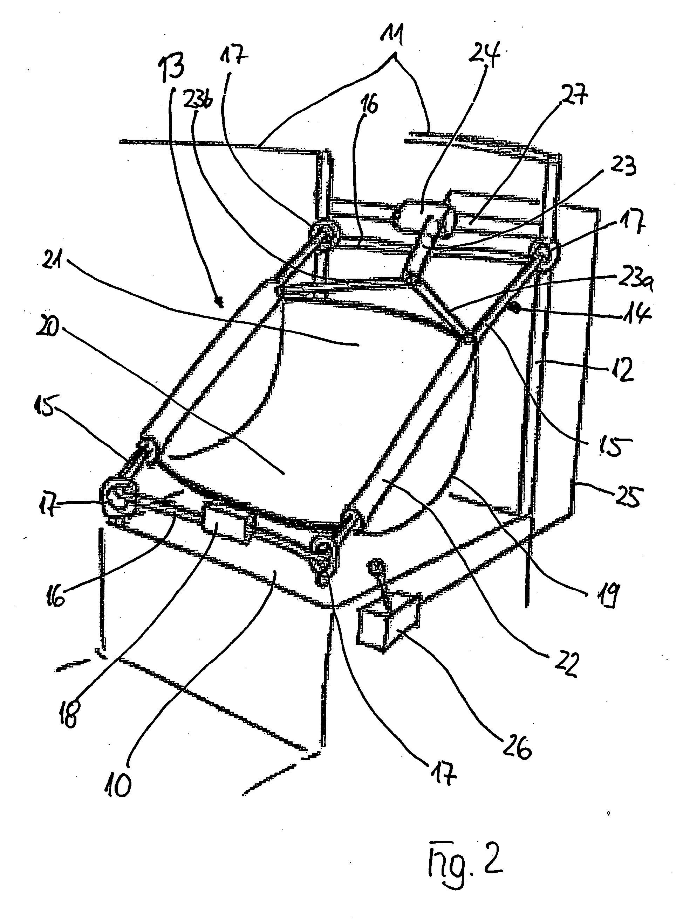

Der in den Figuren 1 und 2 dargestellte Sitz ist bei einem Gabelstapler mit einem Geräteträger 10 und einem Rückenstreben 12 aufweisenden Überrollbügel 11 installiert. Dabei ist der insgesamt mit 13 bezeichnete Sitz an einem Stützrahmen 14 gehaltert und im Inneren dieses Stützrahmens kardanisch aufgehängt, wobei der Stützrahmen aus zwei seitlich des Sitzes 13 verlaufendenDiagonalgurten 15 und dazwischen geführten Quergurten 16 besteht. Dabei handelt es sich bei den vorgenannten Diagonal- und Quergurten um ein einziges umlaufendes Gurtband, welches durch entsprechend am Geräteträger 10 und den Rückenstreben 12 des Überrollbügels 11 angebrachte Ringösen 17 geführt ist und dessen Enden in einem Gurtspanner 18 zusammengeführt sind, so dass dadurch eine entsprechende Gurtspannung auf den Stützrahmen 14 aufgebracht werden kann.

Der Sitz 13 besteht aus einer im Inneren des Stützrahmens 14 angeordneten Sitzschale 19 aus einem textilen, atmungsaktiven Material, die ineinander übergehend eine Sitzfläche 20 und eine Rückenlehne 21 ausbildet. Die Sitzschale 19 ist mittels seitlich angeordneter Verschiebeschlaufen 22 an den diagonal aufgespannten Diagonalgurten 15 verschiebbar geführt, so dass sich bei einer Längsverschiebung der Sitzschale 19 an den Diagonalgurten 15 gleichzeitig eine Horizontal- und eine Vertikalbewegung der Sitzschale 19 ergibt.

Am oberen Ende der Rückenlehne 21 der Sitzschale 19 greifen zwei Verstellgurte 23a, b an, die in einem einzigen Verstellgurt 23 zusammenlaufen, wobei der Verstellgurt 23 in einen an einer die Rückenstreben 12 des Überrollbügels 11 verbindenden Querstrebe 27 fahrzeugfest angebrachten Gurtaufroller 24 einläuft. Von dem Gurtaufroller 24 führt ein Bowdenzug 25 zu einer in Reichweite der auf dem Sitz 13 sitzenden Benutzerperson 50 angeordneten Schaltvorrichtung 26, mittels derer der Gurtaufroller 24 in drei Schaltstellungen zu bringen ist.

Eine erste Schaltstellung des Gurtaufrollers 24 ist dadurch gekennzeichnet, dass sich der Gurtaufroller in einem Freilaufzustand mit freiem Gurtbandauszug entgegen der in Aufwickelrichtung für den Verstellgurt 23 vorgegebenen Vorspannung befindet; in dieser Schaltstellung kann die Sitzschale 19 längs der Diagonalgurte 15 nach vorwärts - abwärts verschoben werden, weil diese Schaltstellung des Gurtaufrollers 24 einen Auszug des Verstellgurtes 23 aus dem Gurtaufroller entgegen der Einwirkung der in dem Gurtaufroller üblicherweise vorgesehenen Aufwickelfeder ermöglicht.

Ist der Gurtaufroller über die Schaltvorrichtung 26 in einen Positionierungszustand geschaltet, in welchem lediglich in Gurtauszugsrichtung eine Sperrung des Gurtaufrollers 24 erfolgt, so kann die Sitzschale 19 in aufwärts - rückwärts - Richtung verschoben werden, weil der Verstellgurt 23 unter der Wirkung der Aufwickelfeder in den Gurtaufroller 24 eingezogen wird; in dieser Schaltposition ist aber eine gegenläufige Bewegung der Sitzschale 19 ausgeschlossen, so dass nur diese eine gewünschte Verschiebung der Sitzschale 19 möglich ist.

In einer dritten Schaltstellung ist der Gurtaufroller sowohl in Gurtaufwickelrichtung als auch in Gurtauszugsrichtung bezüglich des Verstellgurtes 23 blockiert, so dass in dieser Schaltstellung der Schaltvorrichtung 26 die Sitzschale 19 an den Diagonalgurten 15 des Stützrahmens 19 fixiert ist.

Aufgrund der vorstehend erläuterten Anordnung ist es möglich, dass die Benutzerperson 50 in der Sitzschale 19 sitzt und über Bedienung der Schaltvorrichtung 26 stufenlos die ihr angenehmste Sitzposition findet und mittels der zugeordneten Schaltstellung der Schaltvorrichtung 26 auch fixiert.

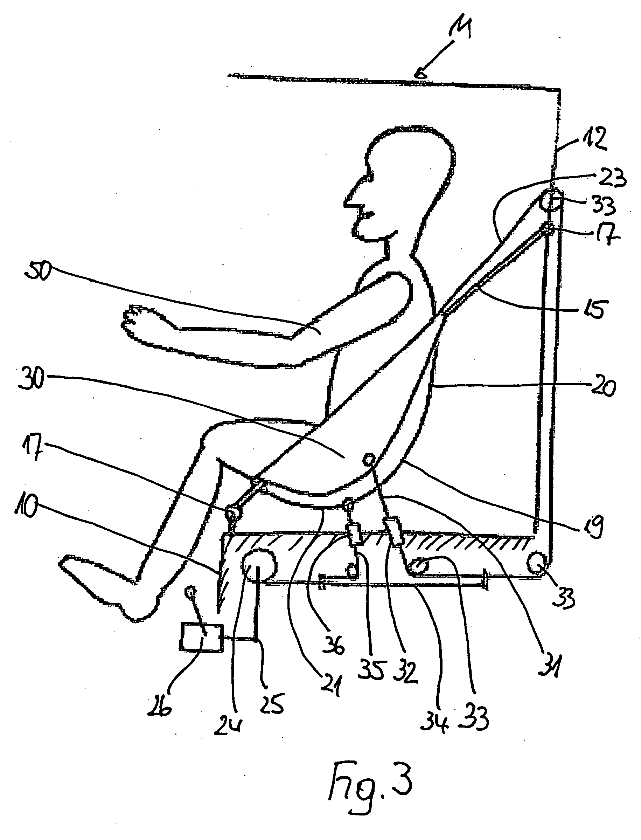

In Figur 3 ist eine Weiterentwicklung des zuvor beschriebenen Sitzes dargestellt, bei welcher nun auch der zwischen den Diagonalgurten 15 liegende und die Benutzerperson 50 tragende Bereich der Sitzschale 19 veränderbar ist. Hierzu übergreift die Sitzschale 19 die seitlich an ihr verlaufenden Diagonalgurte 15 des Stützrahmens 14 mit entsprechend angeordneten Schürzen 30, an denen jeweils Spanngurte 31 angreifen. Je nach der von den Spanngurten 31 auf die Schürzen 30 der Sitzschale 19 ausgeübten Spannung hängt der zwischen den Diagonalgurten 15 befindliche Bereich der Sitzschale 19 durch und gibt so eine mehr oder weniger große Auflagerfläche für die Benutzerperson 50. Da in der Regel die erforderliche Auflagerfläche für die Benutzerperson 50 auch unmittelbar proportional der Stellung der Sitzschale 19 in dem Stützrahmen 14 ist, sind bei dem dargestellten Ausführungsbeispiel die Spanngurte 31 über entsprechend fahrzeugfest angeordnete Umlenkrollen 33 geführt und mit dem Verstellgurt 23 beziehungsweise den Verstellgurten 23a, b zu jeweils einem geschlossenen Gurtring zusammengeführt. Wird somit die Sitzschale 19 nach aufwärts - rückwärts verschoben, so geben die Spanngurte 31 in Richtung der Sitzschale 19 nach, wodurch sich das Maß der über die Diagonalgurte 15 hängenden Schürzen 30 verringert und sich der zwischen den Diagonalgurten 15 befindliche Sitzbereich vertieft. Wird umgekehrt die Sitzschale 19 nach vorwärts - abwärts verschoben, so wird der Verstellgurt 23 nachgeführt, was zu einer stärkeren Spannung der Spanngurte 31 führt, die dann die Schürzen 30 in einem stärkeren Maß über die Diagonalgurte 15 herüberziehen. Hierbei kann in den so geschlossen Gurtring beziehungsweise die Gurtringe von Spanngurten 31 und Verstellgurten 23 ein Gurtspanner 32 eingeschaltet werden.

Die Sitzverstellung geschieht in diesem Ausführungsbeispiel über einen an dem aus Spanngurten 31 und Verstellgurten 23 bestehenden Gurtringen angreifenden Steuergurt 34, der seinerseits zu einem Gurtaufroller 24 geführt ist; dieser Gurtaufroller 24 ist wiederum über einen Bowdenzug 25 mit einer Schaltvorrichtung 26 verbunden. Die Schaltvorrichtung 26 ist dabei in gleicher Weise ausgelegt, wie zu dem Ausführungsbeispiel in Figuren 1 und 2 beschrieben, so dass über die Schaltvorrichtung 26 die Stellung der Sitzschale 19 an den Diagonalgurten 15 nunmehr einschließlich der Veränderung der Auflagerfläche der Sitzschale 19 selbst einstellbar ist.

Um der Spannbewegung der Spanngurte 31 ein Kontrollelement entgegenzusetzen ist vorgesehen, dass an der Sitzschale 19 im Bereich der Sitzfläche 20 wenigstens ein zusätzlicher Abspanngurt 35 angreift, der unter Zwischenschaltung eines Gurtspanners 36 an den Steuergurt 34 angeschlossen ist. Üben also die Spanngurte 31 auf die seitlichen Schürzen 30 der Sitzschale 19 eine entsprechende Zugspannung auf, so kann diese Zugspannung durch den an der Sitzfläche angreifenden Abspanngurt 35 reguliert werden, wobei in zweckmäßiger Weise die Bewegung des Abspanngurtes 35 über den Steuergurt 34 ebenfalls regelbar ist, so dass bei einer in dem Sitz 13 sitzenden Benutzerperson 50 unter Betätigung der Schaltvorrichtung 26 eine insgesamt aufeinander abgestimmte und synchronisierte Bewegung der Sitzschale 19 in dem textilen Stützrahmen 14 gegeben ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Land-, Luft- oder Seefahrzeug mit einem an einem aus textilen Gurten aufgespannten Stützgerüst gehalterten Sitz zur Beförderung einer in dem Sitz sitzenden Person, wobei das Stützgerüst an oberhalb der Sitzfläche und unterhalb der Sitzfläche des Sitzes befindlichen Fahrzeugstrukturteilen befestigt ist, **dadurch gekennzeichnet, dass** das Stützgerüst als den als textile Sitzschale (19) mit der Sitzfläche (20) und einer Rückenlehne (21) ausgebildeten Sitz (13) ringförmig umschließender Stützrahmen (14) bestehend aus einem einzigen durch fahrzeugfest angeordnete Ringösen (17) geführten textilen Gurt (15, 16) ausgebildet ist, wobei die seitlich des Sitzes (13) verlaufenden Gurtteile als Diagonalgurte (15) zwischen einer unterhalb der Sitzfläche (20) angebrachten Ringöse (17) und einer oberhalb der Rückenlehne (21) angebrachten Ringöse (17) verlaufen, und dass der Sitz an den Diagonalgurten (15) verschiebbar angeordnet und wenigstens ein Verstellgurt (23) von der Rückenlehne (21) des Sitzes (13) zu einer oberhalb des Sitzes (13) angeordneten Fixiervorrichtung (24, 33) für den Verstellgurt (23) geführt ist.

2. Land-, Luft- oder Seefahrzeug nach Anspruch 1, **dadurch gekennzeichnet, dass** die Fixiervorrichtung als Klemmvorrichtung für den Verstellgurt (23) ausgebildet ist.

3. Land-, Luft- oder Seefahrzeug nach Anspruch 1, **dadurch gekennzeichnet, dass** die Fixiervorrichtung für den Verstellgurt (23) als Gurtaufroller (24) ausgebildet ist, der über einen Bowdenzug (25) mit einer in Reichweite der auf dem Sitz (13) sitzenden Person (50) angeordneten Schaltvorrichtung (26) verbunden ist, mittels derer der Gurtaufroller (24) entweder in einen Freilaufzustand mit freiem Gurtbandauszug entgegen der in Aufwickelrichtung vorgegebenen Vorspannung des Gurtaufrollers oder in einen Sperrzustand mit jeweils vollständiger, sowohl in Gurtaufwickelrichtung als auch in Gurtauszugsrichtung wirksamer Blockierung der Gurtwelle oder in einen den Gurtaufroller lediglich in Gurtauszugsrichtung sperrenden Positionierungszustand schaltbar ist.

4. Land-, Luft- oder Seefahrzeug nach einem der Ansprüche 1 bis 3, **dadurch gekennzeichnet, dass** in den Verlauf des den Stützrahmen (14) bildenden Gurtes (15, 16) ein Gurtspanner (18) eingeschaltet ist.

5. Land-, Luft- oder Seefahrzeug nach einem der Ansprüche 1 bis 4, **dadurch gekennzeichnet, dass** die Diagonalgurte (15) des Stützrahmens (14) in einem Winkel von 45° zur horizontalen Fahrzeugachse angeordnet sind.

6. Land-, Luft- oder Seefahrzeug nach einem der Ansprüche 1 bis 4, **dadurch gekennzeichnet, dass** die Diagonalgurte (15) des Stützrahmens (14) in einem Winkel von mehr als 45° zur horizontalen Fahrzeugachse angeordnet sind.

7. Land-, Luft- oder Seefahrzeug nach einem der Ansprüche 1 bis 6, **dadurch gekennzeichnet, dass** die textile Sitzschale (19) mit die seitlichen Diagonalgurte (15) des Stützrahmens (14) beweglich übergreifenden Schürzen (30) ausgebildet ist und die Schürzen (30) zur Veränderung der zwischen den Diagonalgurten (15) befindlichen Auflagerfläche für eine in dem Sitz sitzende Person über längenveränderliche Spanngurte (31) in ihrem die Diagonalgurte (18) übergreifenden Maß einstellbar sind.

8. Land-, Luft- oder Seefahrzeug nach Anspruch 7, **dadurch gekennzeichnet, dass** die Spanngurte (31) über Umlenkrollen (33) geführt und an den Verstellgurt (23) für den Sitz (13) angeschlossen sind.

9. Land-, Luft- oder Seefahrzeug nach Anspruch 7 oder 8, **dadurch gekennzeichnet, dass** in den Gurtverlauf der Spanngurte (31) ein Gurtspanner (32) eingeschaltet ist.

10. Land-, Luft- oder Seefahrzeug nach einem der Ansprüche 7 bis 9, **dadurch gekennzeichnet, dass** an dem Gurtverlauf von Spanngurt (31) und Verstellgurt (23) ein zu einem Gurtaufroller (24) führender Steuergurt (34) angreift und der Gurtaufroller (24) über einen Bowdenzug (25) mit einer Schaltvorrichtung (26) verbunden ist, mittels derer der Gurtaufroller (24) entweder in einen Freilaufzustand mit freiem Gurtbandauszug entgegen der in Aufwickelrichtung vorgegebenen Vorspannung des Gurtaufrollers oder in einen Sperrzustand mit jeweils vollständiger, sowohl in Gurtaufwickelrichtung als auch in Gurtauszugsrichtung wirksamer Blockierung der Gurtwelle oder in einen den Gurtaufroller lediglich in Gurtauszugsrichtung sperrenden Positionierungszustand schaltbar ist.

11. Land-, Luft- oder Seefahrzeug nach einem der Ansprüche 7 bis 10, **dadurch gekennzeichnet, dass** an der Sitzschale (19) im Bereich der Sitzfläche (20) ein Abspanngurt (35) angreift, der der Gurtspannung der an den Schürzen (30) angreifenden Spanngurte (31) entgegenwirkt.

12. Land-, Luft- oder Seefahrzeug nach Anspruch 11, **dadurch gekennzeichnet, dass** in den Verlauf des Abspanngurtes (35) ein Gurtspanner (36) eingeschaltet ist.

13. Land-, Luft- oder Seefahrzeug nach Anspruch 11, **dadurch gekennzeichnet, dass** der Abspanngurt (35) an den Steuergurt (34) angeschlossen ist.

14. Land-, Luft- oder Seefahrzeug nach einem der Ansprüche 1 bis 13, **dadurch gekennzeichnet, dass** das Fahrzeug als Gabelstapler mit einem podestartigen, sich unterhalb eines Fahrersitzes (13) befindlichen Geräteträger (10) und einem hinter dem Fahrersitz hochragenden Überrollbügel (11) ausgebildet ist, wobei die den Stützrahmen (14) aufspannenden Ringösen (17) am Geräteträger (10) und am Überrollbügel (11) befestigt sind.

15. Land-, Luft- oder Seefahrzeug nach Anspruch 14, **dadurch gekennzeichnet, dass** die an dem Überrollbügel (11) befestigten Ringösen (17) lageveränderbar eingerichtet sind.

## Claims

1. Land vehicle, aircraft or watercraft having a seat supported on a supporting structure composed of textile straps for transporting a person sitting in the seat, whereby the supporting structure is secured to structural vehicle parts disposed above the seating surface and below the seating surface, **characterized in that** the supporting structure is embodied as a support frame (14) that extends about or encircles the seat (13), which is embodied as a textile seat portion (19) having the seating surface (20) and a backrest (21), wherein the support frame is comprised of a single textile strap (15, 16) that is guided through vehicle-mounted eye rings (17), whereby the strap parts that extend laterally of the seat (13), as diagonal straps (15), extend between an eye ring (17) mounted below the seating surface (20) and an eye ring (17) mounted above the backrest (21), and **in that** the seat is displaceably disposed on the diagonal straps (15) and at least one adjustment strap (23) is guided from the backrest (21) of the seat (13) to a fixation mechanism (24, 33) for the adjustment strap (23) disposed above the seat (13).

2. Land vehicle, aircraft or watercraft according to claim 1, **characterized in that** the fixation mechanism is embodied as a clamping or gripping device for the adjustment strap (23).

3. Land vehicle, aircraft or watercraft according to claim 1, **characterized in that** the fixation mechanism for the adjustment strap (23) is embodied as a strap retractor (24) that via a Bowden cable (25) is connected to a switching or control device (26) that is disposed within reach of the person (50) seated on the seat (13), by means of which control device the strap retractor (24) is switchable either into a free running state with free strap extension or withdrawal counter to the bias of the strap retractor prescribed in the wind up direction, or into a blocked state having respectively complete blocking of the strap shaft that is effective not only in the strap wind up direction but also in the strap withdrawal direction, or into a positioning state that blocks the strap retractor only in the strap withdrawal direction.

4. Land vehicle, aircraft or watercraft according to one of the claims 1 to 3, **characterized in that** a tensioner (18) is inserted or disposed into the run of the strap (15, 16) that forms the support frame (14).

5. Land vehicle, aircraft or watercraft according to one of the claims 1 to 4, **characterized in that** the diagonal straps (15) of the support frame (14) are disposed in an angle of 45° relative to the horizontal vehicle axis.

6. Land vehicle, aircraft or watercraft according to one of the claims 1 to 4, **characterized in that** the diagonal straps (15) of the support frame (14) are disposed in an angle of greater than 45° relative to the horizontal vehicle axis.

7. Land vehicle, aircraft or watercraft, according to one of the claims 1 to 6, **characterized in that** the textile seat portion (19) is provided with aprons or skirts (30) that moveably extend over the lateral diagonal straps (15) of the support frame (14), and the aprons (30), for the alteration of the support surface disposed between the diagonal straps (15) for a person occupying the seat, can be adjusted via length-variable tensioning straps (31) in the amount by which the aprons extend over the diagonal straps (18).

8. Land vehicle, aircraft or watercraft according to claim 7, **characterized in that** the tensioning straps (31) are guided over guide rollers (33) and are connected to the adjustment strap (23) for the seat(13).

9. Land vehicle, aircraft or watercraft according to claim 7 or 8, **characterized in that** a tensioner (32) is inserted or disposed in the run of the tensioning straps (31).

10. Land vehicle, aircraft or watercraft according to one of the claims 7 to 9, **characterized in that** a control strap (34) that leads to a strap retractor (24) engages on the run of the tensioning strap (31) and the adjustment strap(23), and the strap retractor (24) is connected via a Bowden cable (25) with a switching or control device (26), by means of which the strap retractor (24) is switchable either into a free running state with free strap extension or withdrawal counter to the bias of the strap retractor prescribed in the wind up direction, or into a blocked state having respectively complete blocking of the strap shaft that is effective not only in the strap wind up direction but also in the strap withdrawal direction, or into a positioning state that blocks the strap retractor only in the strap withdrawal direction.

11. Land vehicle, aircraft or watercraft according to one of the claims 7 to 10, **characterized in that** a guy strap (35) engages the seat portion (19) in the region of the seating surface (20) and counteracts the strap tension of the tensioning straps (31) that engage the aprons (30),

12. Land vehicle, aircraft or watercraft according to claim 11, **characterized in that** a tensioner (36) is inserted or disposed in the run of the guy strap (35).

13. Land vehicle, aircraft or watercraft according to claim 11, **characterized in that** the guy strap (35) is attached to the control strap (34).

14. Land vehicle, aircraft or watercraft according to one of the Claims 1 to 13, **characterized in that** the vehicle is embodied as a forklift having a platform-like device support (10), which is disposed below a driver's seat (13), and a roll bar (11) that extends upwardly behind the driver's seat, whereby the eye rings (17) that suspend the support frame (14) are secured to the device support (10) and to the roll bar (11).

15. Land vehicle, aircraft or watercraft according to claim 14, **characterized in that** the eye rings (17) that are secured to the roll bar (11) are designed for being altered in position.

## Revendications

1. Véhicule terrestre, aérien ou maritime, comportant un siège, maintenu sur une ossature de support, fixé par des sangles textiles, et destiné à transporter une personne assise sur le siège, l'ossature de support étant fixée à des éléments de structure du véhicule, situés au-dessus de la surface d'assise et en dessous de la surface d'assise du siège, **caractérisé en ce que** l'ossature de support est réalisée sous la forme d'un cadre de support (14), qui entoure sous forme annulaire le siège (13), réalisé sous la forme d'une cuvette de siège (19) avec la surface d'assise (20) et un dossier (21), et qui est formé par une seule sangle (15, 16) textile guidée à travers des anneaux (17) fixés de manière solidaire au véhicule, sachant que les parties de sangle s'étendant sur le côté du siège (13) sous la forme de sangles diagonales (15) passent entre un anneau (17) monté en dessous de la surface d'assise (20) et un anneau (17) monté au-dessus du dossier (21), et **en ce que** le siège est disposé de manière mobile au niveau des sangles diagonales (15) et au moins une sangle de réglage (23) est guidée depuis le dossier (21) du siège (13) vers un dispositif de fixation (24, 33) pour la sangle de réglage (23), lequel est disposé au-dessus du siège (13).

2. Véhicule terrestre, aérien ou maritime selon la revendication 1, **caractérisé en ce que** le dispositif de fixation est réalisé sous la forme d'un dispositif de blocage pour la sangle de réglage (23).

3. Véhicule terrestre, aérien ou maritime selon la revendication 1, **caractérisé en ce que** le dispositif de fixation pour la sangle de réglage (23) est réalisé sous la forme d'un enrouleur de sangle (24) qui, par l'intermédiaire d'un câble de traction sous gaine (25), est relié à un dispositif de commande (26), qui est monté à portée de main de la personne (50) assise sur le siège (13) et au moyen duquel l'enrouleur de sangle (24) peut être commandé dans une position débloquée avec un déroulement libre de la sangle à l'encontre de la précontrainte définie dans le sens d'enroulement ou dans une position bloquée avec un blocage complet de l'arbre d'enroulement, qui agit dans le sens d'enroulement et dans le sens de déroulement, ou dans une position bloquant l'enrouleur de sangle uniquement dans la position de déroulement.

4. Véhicule terrestre, aérien ou maritime selon l'une quelconque des revendications 1 à 3, **caractérisé en ce qu'**un tendeur de sangle (18) est monté dans le tracé de la sangle (15, 16) formant le cadre de support (14).

5. Véhicule terrestre, aérien ou maritime selon l'une quelconque des revendications 1 à 4, **caractérisé en ce que** les sangles diagonales (15) du cadre de support sont disposés en formant un angle de 45° avec l'axe horizontal du véhicule.

6. Véhicule terrestre, aérien ou maritime selon l'une quelconque des revendications 1 à 4, **caractérisé en ce que** les sangles diagonales (15) du cadre de support sont disposés en formant un angle supérieur à 45° avec l'axe horizontal du véhicule.

7. Véhicule terrestre, aérien ou maritime selon l'une quelconque des revendications 1 à 6, **caractérisé en ce que** la cuvette de siège (19) textile est réalisée avec des tabliers (30) enserrant de manière mobile les sangles diagonales (15) latérales du cadre de support (14), et, en vue de modifier la surface de support, située entre les sangles diagonales (15), pour une personne assise dans le siège, lesdits tabliers (30) peuvent être réglés dans leur dimension enserrant les sangles diagonales (15) par l'intermédiaire de sangles de tension (31) à longueur réglable..

8. Véhicule terrestre, aérien ou maritime selon la revendication 7, **caractérisé en ce que** les sangles de tension (31) sont guidées sur des poulies de renvoi (33) et sont attachées à la sangle de réglage (23) pour le siège (13).

9. Véhicule terrestre, aérien ou maritime selon la revendication 7 ou 8, **caractérisé en ce qu'**un tendeur de sangle (32) est monté dans le tracé des sangles de tension (31).

10. Véhicule terrestre, aérien ou maritime selon l'une quelconque des revendications 7 à 9, **caractérisé en ce qu'**une sangle de commande (34), menant vers un enrouleur de sangle (24), entre en action dans le tracé de la sangle de tension (31) et de la sangle de réglage (23), et l'enrouleur de sangle (24) est relié, par l'intermédiaire d'un câble de traction sous gaine (25), avec un dispositif de commande (26) au moyen duquel l'enrouleur de sangle (24) peut être commandé dans une position débloquée avec un déroulement libre de la sangle à l'encontre de la précontrainte définie dans le sens d'enroulement ou dans une position bloquée avec un blocage complet de l'arbre d'enroulement, agissant dans le sens d'enroulement et dans le sens de déroulement, ou dans une position bloquant l'enrouleur de sangle uniquement dans la position de déroulement.

11. Véhicule terrestre, aérien ou maritime selon l'une quelconque des revendications 7 à 10, **caractérisé en ce qu'**une sangle de détente (35) entre en prise avec la cuvette de siège (19), dans la zone de la surface d'assise (20), et agit à l'encontre de la tension des sangles de tension (31) entrant en prise avec les tabliers (30).

12. Véhicule terrestre, aérien ou maritime selon la revendication 11, **caractérisé en ce qu'**un tendeur de sangle (36) est monté dans le tracé de la sangle de détente (35).

13. Véhicule terrestre, aérien ou maritime selon la revendication 11, **caractérisé en ce que** la sangle de détente (35) est attachée à la sangle de commande (34).

14. Véhicule terrestre, aérien ou maritime selon l'une quelconque des revendications 1 à 13, **caractérisé en ce que** le véhicule est réalisé sous la forme d'un chariot élévateur à fourche avec un élément porteur (10) en forme de plate-forme, situé en dessous d'un siège (13) du conducteur, et un arceau de sécurité (11) en saillie derrière le siège du conducteur, sachant que les anneaux (17), fixant le cadre de support (14), sont fixés sur l'élément porteur (10) et sur l'arceau de sécurité (11).

15. Véhicule terrestre, aérien ou maritime selon la revendication 14, **caractérisé en ce que** les anneaux (17), fixés sur l'arceau de sécurité (11), sont réglables en position.
